# EUROPEAN PATENT APPLICATION

(11) **EP 3 093 440 A1**
(43) Date of publication of application: **16.11.2016**
(21) Application number: 16167375.1
(22) Date of filing: 28.04.2016
(51) Int. Cl.: F01D 5/26, F01D 17/02, F01D 17/24, F01D 25/06, F04D 29/66, F02K 3/06

(54) **FAN BLADE VIBRATION MONITORING AND CONTROL SYSTEM AND METHOD**

(30) Priority: 01.05.2015 US 201562155836 P
(71) Applicant: Rolls-Royce North American Technologies, Inc., Indianapolis, IN 46241 (US)
(72) Inventor: Molnar, Daniel E., Lebanon, IN Indiana 46052 (US)
(74) Representative: Gille Hrabal

(57) **Abstract**

A gas turbine engine includes a fan positioned in a containment case. The fan includes a fan hub with a number of fan blades extending from the fan hub. A blade motion control system is coupled to the gas turbine engine to detect and control fan blade motion caused by harmonic modes. One or more magnetic materials are coupled to one or more of the fan blades of the gas turbine engine. One or more blade motion sensors are coupled to the containment case and are configured to detect the motion of the magnetic materials coupled to the fan blades. A control unit can adjust one or more operational parameters of the gas turbine engine to disrupt the fan blade motion caused by the detected harmonic modes. A corresponding method for controlling motion caused by harmonic modes in a gas turbine engine fan blade is also provided.

## Description

### Field of the Disclosure:

The present disclosure relates generally to gas turbine engines. More specifically, the present disclosure relates to an apparatus to monitor and control fan blade motion caused by harmonic modes.

### BACKGROUND

Gas turbine engines are used to power aircraft, watercraft, power generators, and other vehicles and machines. Gas turbine engines typically include one or more compressors, a combustor, and one or more turbines. In typical aerospace applications, a fan or propeller is used to draw air into the engine and feed that drawn-in air to the gas turbine core, which includes one or more compressors, a combustor, and one or more turbines. The compressor includes alternating stages of rotors (e.g., rotating disks with blades) and stators (e.g., static vanes), which increase the pressure of the drawn-in air as it travels through the gas turbine core. The compressor thus outputs higher-pressure air, which it delivers to the combustor. In the combustor, the fuel is mixed with the higher-pressure air and is ignited by an igniter. The products of the combustion reaction that occur in the combustor (e.g., hot gas) are directed into a turbine. The turbine is typically made up of an assembly of rotors (e.g., rotating discs with blades), which are attached to turbine shafts, nozzle guide vanes, casings, and other structures. The turbine converts the thermal energy supplied by the combustion products into kinetic energy. The work extracted from the combustion products by the turbine may be used to drive the fan, the compressor, and, sometimes, an output shaft. Leftover products of the combustion are exhausted out of the engine and may provide thrust in some configurations.

Aerospace applications of gas turbine engines include turboshaft, turboprop, and turbofan engines. In typical aerospace applications, the gas turbine engine provides thrust to propel the aircraft, and also supplies power for engine accessories and aircraft accessories. Mechanical power is transferred from turbines to compressors through shaft and spline systems, with bearings providing axial and radial positioning of the rotating components. A drive shaft typically links the turbine and compressor sections of the turbine engine. In turbine engines having multiple turbine and compressor sections, there may be multiple, concentric, independently rotatable drive shafts. For example, a high pressure shaft may link a high pressure compressor with a high pressure turbine, while a low pressure shaft links the fan with a low pressure turbine. The low pressure shaft may be concentric with and disposed within the high pressure shaft.

### SUMMARY

The present application discloses one or more of the features recited in the appended claims and/or the following features which, alone or in any combination, may comprise patentable subject matter. In an example 1, a method for controlling motion caused by harmonic modes in a gas turbine engine fan blade is performed by a turbine engine control unit. The method includes: receiving a sensor signal that includes motion data indicative of fan blade motion of a fan of a gas turbine engine; determining whether the fan blade motion is caused by a harmonic mode by comparing the motion data to reference data indicative of an expected fan blade motion during normal operation of the gas turbine engine; and adjusting an operational parameter of the gas turbine engine in response to determining that the fan blade motion is caused by a harmonic mode.

An example 2 includes the subject matter of example 1, wherein receiving a sensor signal comprises receiving timing data indicative of fan blade motion of the gas turbine engine fan. An example 3 includes the subject matter of example 2, wherein determining whether the fan blade motion is caused by harmonic modes includes comparing the timing data to reference timing data. An example 4 includes the subject matter of any of examples 1-3, and includes obtaining the reference data by detecting the fan blade motion of the gas turbine engine fan in a test environment. An example 5 includes the subject matter of any of examples 1-4, wherein determining whether the fan blade motion is caused by harmonic modes includes determining that the motion data is different than the reference data. An example 6 includes the subject matter of any of examples 1-5, wherein adjusting an operational parameter of the gas turbine engine comprises applying a magnetic force to the fan blade. An example 7 includes the subject matter of any of examples 1-6, wherein adjusting an operational parameter of the gas turbine engine comprises adjusting the rotation speed of the gas turbine engine fan blade. An example 8 includes the subject matter of any of examples 1-7, wherein adjusting an operational parameter of the gas turbine engine comprises adjusting a pitch of the fan blade.

In an example 9, a system for controlling harmonic modes in a gas turbine engine. The system includes: a gas turbine engine including: a turbo fan that includes a rotor and a plurality of fan blades, each fan blade extending radially outward from the rotor having a blade root coupled to the rotor and a blade tip opposite the blade root, wherein a permanent magnet is coupled to one or more fan blades near the blade tip; a fan casing surrounding the turbo fan; one or more sensors coupled to the fan casing configured to detect the motion of the permanent magnet coupled to the one or more fan blades and output motion data; and a control unit in communication with the one or more sensors to receive motion data from the one or more sensors.

An example 10 includes the subject matter of example 9, wherein each fan blade includes a leading edge and a trailing edge, and the permanent magnet is coupled to the fan blade near the leading edge of the fan blade and near the blade tip of the one or more fan blades. An example 11 includes the subject matter of example 9 or example 10, wherein the fan casing includes a containment case and a fan track liner. An example 12 includes the subject matter of example 11, wherein the sensor is coupled to the fan track liner of the fan casing. An example 13 includes the subject matter of any of examples 9-12, wherein the sensor comprises an induction loop configured to detect a time-varying magnetic field caused by the motion of the permanent magnet coupled to the one or more fan blades. An example 14 includes the subject matter of any of examples 9-13, wherein the sensor sends sensor signals to the control unit, and the sensor signals include motion data indicative of the motion of the fan blades. An example 15 includes the subject matter of any of examples 9-14, wherein the control unit is configured to determine whether the motion of one or more fan blades is caused by a harmonic mode by comparing the motion data to reference data. An example 16 includes the subject matter of any of examples 9-15, wherein the sensor is configured to produce a magnetic field that can affect the motion of the one or more fan blades by exerting a magnetic force on the permanent magnet coupled to the one or more fan blades. An example 17 includes the subject matter of any of examples 9-16, and includes one or more electromagnets coupled to the fan casing.

In an example 18, a system for controlling harmonic modes in a gas turbine engine includes: a gas turbine engine including: a turbo fan that includes a rotor and a plurality of fan blades, each fan blade extending radially outwardly from the rotor, each fan blade having a blade root coupled to the rotor and a blade tip opposite the blade root, wherein a permanent magnet is coupled to one or more of the fan blades near the blade tip; and a fan casing surrounding the turbo fan; one or more sensors coupled to the fan casing and configured to detect a change in a magnetic field caused by the permanent magnet; a controller coupled to the gas turbine engine and configured to determine, based on sensor signals produced by the one or more sensors, whether the motion of the one or more fan blades is caused by harmonic modes; and one or more electromagnets coupled to the fan casing and configured to exert an electromechanical force on the permanent magnet.

An example 19 includes the subject matter of example 18, and includes a power source coupled to the one or more electromagnets and the control unit, wherein the power source is configured to provide power to the one or more electromagnets when the controller detects that the motion of one or more fan blades includes motion caused by harmonic modes. An example 20 includes the subject matter of example 19, wherein the one or more electromagnets are configured to generate a magnetic field that exerts a magnetic force on the permanent magnet coupled to the one or more fan blades to cause the one or more fan blades to move. An example 21 includes the subject matter of example 19, wherein the one or more electromagnets is pulsed to generate an intermittent magnetic field. An example 22 includes the subject matter of any of examples 18-21, wherein the one or more sensors and the one or more electromagnets are coupled to the fan casing and the one or more sensors and the one or more electromagnets are disposed in an evenly-spaced radial pattern around the casing. An example 23 includes the subject matter of any of examples 18-22, wherein the number of sensors coupled to the fan casing is different than the number of electromagnets coupled to the fan casing. An example 24 includes the subject matter of example 23, wherein the number of sensors coupled to the fan casing is greater than the number of electromagnets coupled to the fan casing.

### BRIEF DESCRIPTION OF THE DRAWINGS

This disclosure is illustrated by way of example and not by way of limitation in the accompanying figures. The figures may, alone or in combination, illustrate one or more embodiments of the disclosure. Elements illustrated in the figures are not necessarily drawn to scale. Reference labels may be repeated among the figures to indicate corresponding or analogous elements.
FIG. 1 is a simplified schematic block diagram of at least one embodiment of a gas turbine engine system including at least one blade motion control system, blade motion detection logic, and blade motion control logic, as disclosed herein;
FIG. 2 is a simplified meridional sectional view of at least one embodiment of a gas turbine engine that may be implemented in the gas turbine engine system of FIG. 1, as disclosed herein;
FIG. 3 is a simplified partial meridional view of at least one embodiment of a gas turbine engine system, with portions of the casing cut away, including a fan blade and a fan blade motion control system, as disclosed herein;
FIG. 4 is a simplified front elevational view of at least one embodiment of a fan of a gas turbine engine, with portions of the casing cut away, including fan blades and fan blade motion control systems as disclosed herein;
FIG. 5 is a simplified flow diagram of at least one embodiment of a process executable by the computing system of FIG. 1 to monitor and control fan blade motion, including motion caused by harmonic modes, as disclosed herein; and
FIG. 6 is simplified block diagram of an exemplary computing environment in connection with which at least one embodiment of the system of FIG. 1 may be implemented.

### DETAILED DESCRIPTION OF THE DRAWINGS

While the concepts of the present disclosure are susceptible to various modifications and alternative forms, specific embodiments thereof are shown by way of example in the drawings and are described in detail below. It should be understood that there is no intent to limit the concepts of the present disclosure to the particular forms disclosed. On the contrary, the intent is to cover all modifications, equivalents, and alternatives consistent with the present disclosure and the appended claims.

In a gas turbine engine, a fan draws air into the engine. Some of the air may bypass the engine via a bypass duct, and thereby generate propulsive thrust. The remaining air is delivered to one or more compressors and is used to by the engine to generate energy. The fan is configured to rotate about a motor axis and includes a fan hub and fan blades extending from the hub. Each blade has a tip that is in close proximity to the gas turbine engine case. Due to a variety of factors the air flow through the fan may become disrupted. For example, a cross-wind could cause the air to be drawn into the engine in a non-uniform manner. These disruptions may cause perturbations of the fan motion as it rotates about the motor axis. Through constructive interference, these perturbations, in some instances, can cooperate and cause the fan blades to oscillate at a specific frequency and with a specific pattern. These oscillations are called harmonic modes. Harmonic modes can weaken the fan blades and reduce the efficiency of the gas turbine engines. In some instances, fan blade motion caused by harmonic modes can cause mechanical failure of a fan blade. In some cases, blade motion can even cause a fan blade to break free from the gas turbine engine. In another example, a fan blade may experience harmonic modes due to flow interactions in the blade passages, such as blade flutter.

As disclosed herein, fan blade motion caused by harmonic modes can be reduced or prevented by a system of detectable embedded materials (e.g., permanent magnets), sensors, control devices, and computing devices. The disclosed technologies can be used to measure, detect and stop fan blade motion caused by harmonic modes, and as a result, cause the fan to operate more efficiently and safely. The described technologies may be used to mitigate in real-time potentially damaging blade responses. These real-time technologies may allow a less robust rotor design to be implemented that is lower in weight and more aerodynamically efficient.

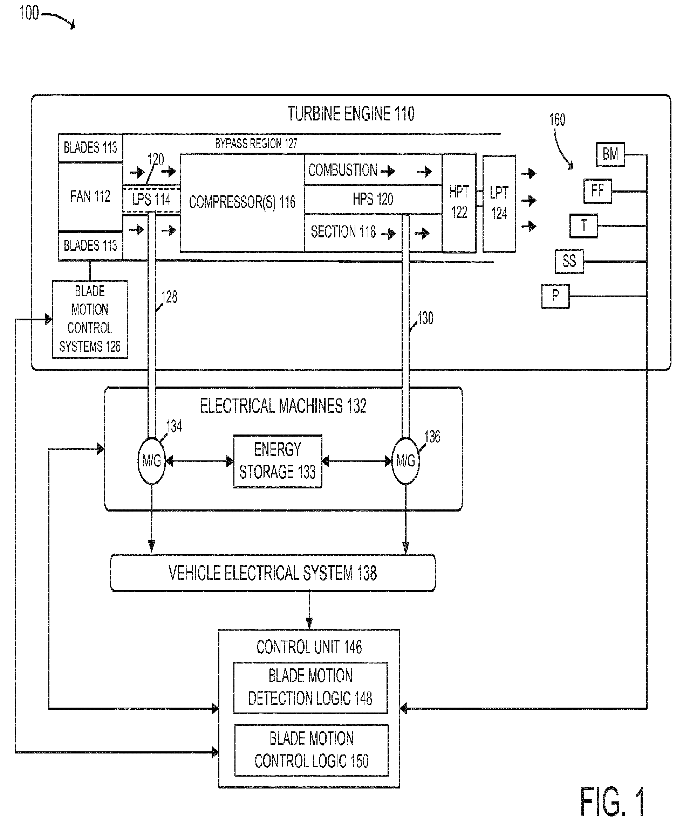

Referring now to FIG. 1, an embodiment of a gas turbine engine system 100 includes a turbine engine 110, electrical machines 132, a vehicle electrical system 138, and a control unit 146. As shown in the subsequent figures and described in more detail below, the turbine engine 110 includes a fan 112, one or more compressors 116 and one or more turbines 122, 124. Each of the fan 112, the compressors 116, and the turbines 122, 124 includes one or more rotors having rotor blades. Thus, any one or more of the fan 112, the compressors 116, and the turbines 122 may be equipped with the blade motion control technology disclosed herein (e.g., one or more blade motion control systems 126). For ease of discussion, however, aspects of the disclosed blade motion control technology are described with reference to blades of the fan 112 (e.g., fan blades 113).

The illustrative blade motion control system(s) 126 are configured to detect motion of the fan blades 113, including motion caused by harmonic modes. The blade motion control system 126 includes one or more detectable embedded materials (such as a magnet or ferrous alloy) coupled to the fan blades 113, and one or more fan case mounted devices coupled to the fan case. The one or more detectable embedded materials may be embodied as a magnet or a ferrous allow configured to induce a response in the fan case mounted devices. The fan case mounted devices may be embodied as induction coils configured to detect time-varying magnetic fluxes or magnets configured to radiate magnetic flux. While terminology such as "detectable embedded material" may be used herein for ease of discussion, it should be understood that the material need not be physically "embedded" in all embodiments. For instance, in some embodiments the material may be fixedly mounted to the rotor.

The induction coils or magnets coupled to the fan case are configured to detect time-varying magnetic flux caused by the motion of the permanent magnets that are coupled to the fan blades 113 (e.g., any damaging motion, including flutter). In some embodiments, the one or more fan case mounted devices include one or more electromagnets coupled to the fan case and configured to induce a force on the detectable embedded materials that are coupled to the fan blades 113. In some embodiments, electrical energy applied to the blade motion control system 126 causes one or more of the electromagnets to create a magnetic field that exerts a force on the permanent magnets coupled to the fan blades 113.

The control unit 146 includes blade motion detection logic 148 and blade motion control logic 150. The blade motion detection logic 148 is configured to determine whether the fan blades 113 are experiencing motion, and more particularly, motion caused by harmonic modes. The blade motion control logic 150 is configured to adjust one or more operational parameters of the gas turbine engine 110 in order to disrupt any detected harmonic modes. For example, the blade motion control logic 150 may, in response to detection of a harmonic mode by the blade motion detection logic 148, cause electrical energy to be applied to electromagnets of the blade motion control system 126, and thereby apply a force to the fan blades 113. For example, blade motion indicative of harmonic modes may be caused by blade flutter.

Referring now in more detail to the embodiment of FIG. 1, the illustrative turbine engine 110 is a multi-shaft turbofan gas turbine engine configured for aerospace applications; however, aspects of the present disclosure are applicable to other types of turbine engines, including various types of turboprop and turboshaft systems and turbine engines that are configured for other, non-aerospace types of applications (e.g., marine, etc.). In the turbine engine 110, the fan 112 (e.g., a fan, variable pitch propeller, etc.) draws air into the engine 110. Some of the air may bypass other engine components via a bypass region 127 (e.g., a bypass duct), and thereby generate propulsive thrust. The remaining air is delivered to one or more compressors 116. In some embodiments, a low pressure compressor may increase the pressure of air received from the fan 112, and a high pressure compressor may further increase the pressure of air received from the low pressure compressor. In any event, the compressor(s) 116 increase the pressure of the air and forward the higher-pressure air to a combustor 118.

In the combustor 118, the pressurized air is mixed with fuel, which is supplied to the combustor 118 by a fuel supply (not shown). Typically, a flow meter, flow control valve, or similar device (e.g., a fuel flow sensor, FF 160) monitors and/or regulates the flow of fuel into the combustor 118. An igniter (not shown) is typically used to cause the mixture of air and fuel to combust. The high-energy combusted air is directed to the one or more turbines 122, 124. In the illustrative embodiment, a high pressure turbine 122 is disposed in axial flow series with a low pressure turbine 124. The combusted air expands through the turbines 122, 124, causing them to rotate. The combusted air is then exhausted through, e.g., a propulsion nozzle (not shown), which may generate additional propulsive thrust.

In the illustrative embodiments, the rotation of the turbines 122, 124 causes engine drive shafts 114, 120, to rotate, and rotation of the low pressure turbine drives a low pressure shaft 114, which drives the fan 112. Rotation of the high pressure turbine 122 drives a high pressure shaft 120, which drives the compressor(s) 116. In some embodiments, the shafts 114, 120 may be concentrically disposed. In some embodiments, more than two shafts 114, 120 may be provided. For example, in some embodiments, an intermediate shaft is disposed concentrically between the low pressure shaft 114 and the high pressure shaft 120 and supports an intermediate-pressure compressor and turbine.

The illustrative turbines 122, 124 additionally drive one or more electrical machines 132 (via, e.g., a power take-off assembly or "more" electric technology). The electrical machines 132 may be embodied as any suitable energy source, e.g., electric motors and/or motor/generators (e.g., an engine driven generator and battery storage). For instance, the motor/generator 134 may generate electrical power that is supplied to other components or systems of the aircraft or other vehicle to which it is coupled. The motor/generator 136 may operate similarly. Each or either of the motor/generators 134, 136 may have a motor mode in which the motor/generator 136 receives electrical energy from, for example, the energy storage 133 or the vehicle electrical system 138, and converts the received electrical energy into rotational power. In some embodiments, electrical power is supplied to the components of the gas turbine engine by a battery, such as energy storage 133.

The control unit 146 controls the overall operation of the engine 110 or various components of the turbine engine system 100. For example, the control unit 146 may be embodied as a Full Authority Digital Engine Controller or FADEC, or may be embodied as a dedicated controller or electrical circuitry. In some embodiments, the control unit 146 is in electrical communication with the blade motion control system(s) 126. For example, the control unit 146 may periodically send control signals to the blade motion control systems 126, e.g., to energize one or more electromagnets to generate magnetic fields that exert a force on the permanent magnets coupled to the fan blades 113. The illustrative control unit 146 is powered by electrical energy generated by the electrical machines 132 and provided to the vehicle electrical system 138 during operation of the turbine engine 110.

The control unit 146 receives electrical signals from a number of different sensors 160, which are installed at various locations on the turbine engine 110 and/or other components of the system (e.g., the compressor 116 and compressor drive shaft 120), to sense and/or measure various physical parameters such as blade motion (BM), temperature (T), shaft speed (SS), air pressure (P), and fuel flow (FF). Other parameters that may be measured by sensors 160 or calculated using data obtained by one or more sensors 160 include: magnetic field intensity, circumferential phase, electrical current, air flow, pressure ratio, and/or other measurements, which can be used to predict, for example, a surge margin or a flutter margin. When the turbine engine 110 is in operation, these parameters represent various aspects of the current operating condition of the turbine engine 110.

In general, the sensors 160 supply electrical sensor data signals representing instantaneous values of the sensed/measured information over time, to the control unit 146. In response to the sensor data signals, the control unit 146 supplies various commands to various components of the turbine engine system 100, in order to control various aspects of the operation of the turbine engine system 100. The control unit 146 executes the blade motion detection logic 148 from time to time during operation of the turbine engine system 100 (e.g., in response to changes in operating conditions). If the blade motion detection logic 148 detects irregular blade motion in the fan blades 113, the blade motion control logic 150 may send control signals to one or more components of the blade motion control systems 126, e.g., to change one or more operational parameters of the gas turbine engine 110, in order to prevent or disrupt the detected fan blade motion (e.g., motion caused by harmonic modes).

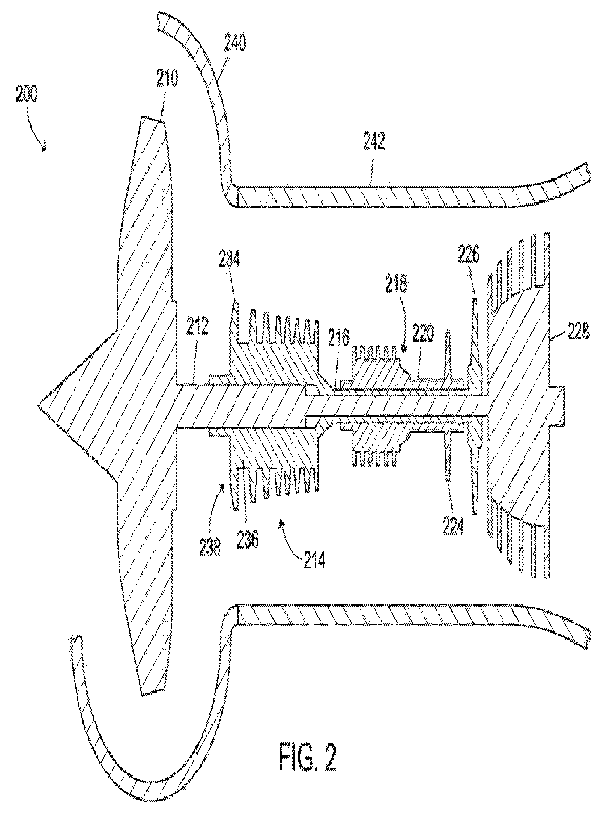

Referring now to FIG. 2, a greatly simplified view of an embodiment 200 of mechanical components of the turbine engine 110 is shown. The illustrative embodiment 200 includes a fan (or low pressure compressor) 210, a low pressure shaft 212, an intermediate pressure compressor 214, an intermediate pressure shaft 216, a high pressure compressor 218, a high pressure shaft 220, a high pressure turbine 224, an intermediate pressure turbine 226, and a low pressure turbine 228. The embodiment 200 of the turbine engine 110 also includes an engine case, which is illustratively embodied as a case 240 encompassing the fan 210 and a case 242 encompassing the shafts 212, 216, 220 and the other components. The case 240 and the case 242 may be embodied as a single component or as multiple separate cases or case sections. The illustrative shafts 212, 216, 220 are concentrically disposed. The illustrative compressor 214 includes a rotor 238. The rotor 238 includes a number of blades 234 that radially extend from a rotor wheel or hub 236. The illustrative compressor 218 and turbines 224, 226, 228 each include rotors that are configured in a similar manner.

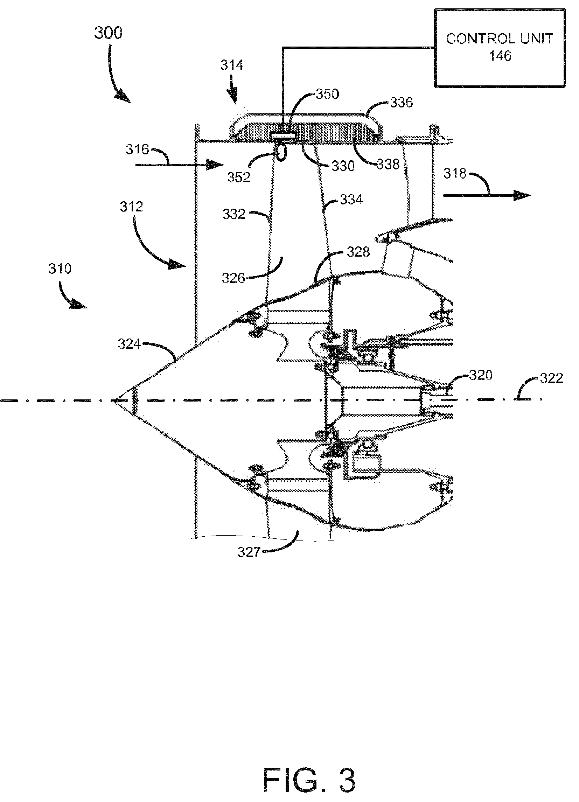

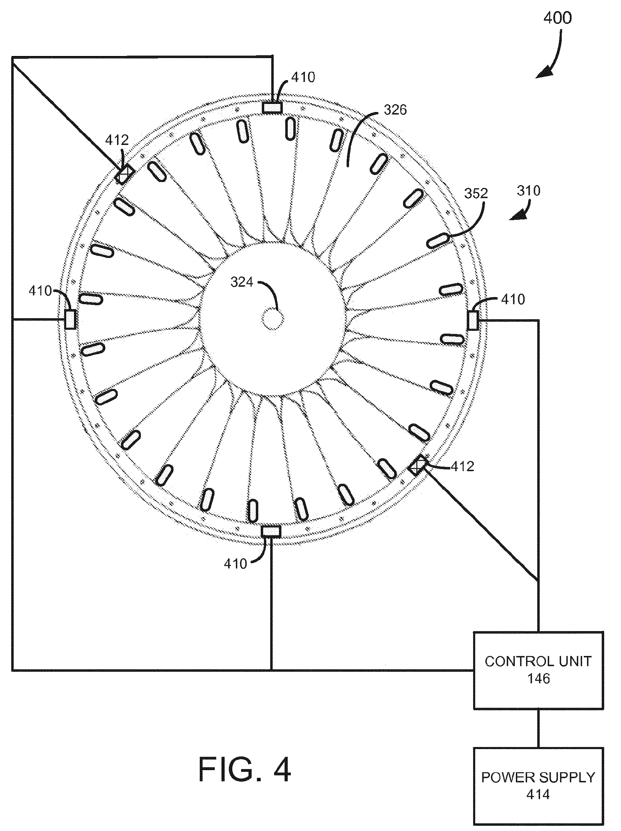

While not specifically shown in FIG.2, the fan 210 also includes at least one rotor having a number of blades radially extending from a hub. FIGS. 3 and 4, described below, show illustrative embodiments of the components of the fan 210, including fan blades and hub. While the description of FIGS. 3 and 4 may refer specifically to a fan and fan blades, it should be understood that aspects of this disclosure are analogously applicable to compressors of various types (e.g., centrifugal and mixed-flow compressors), many different types of fans (e.g., single-stage fans and multi-stage fans), and turbines of various types or configurations.

Referring to FIG. 3, an embodiment 300 of the blade motion control system 126 is shown. A fan assembly 310 includes a fan 312 and a fan case 314, and is configured to move air from an intake side of the fan assembly 310, in the direction of arrow 316, to an exhaust side of the fan assembly 310, in the direction of arrow 318. An engine drive shaft 320 is coupled to the fan 312 and is configured to rotate about a motor axis 322 in response to power output (e.g., rotational power) provided by a motor (not shown). The illustrative fan 312 includes a fan hub 324 and one or more fan blades 326, 327 (blade 327 is partially shown. The fan blades 326, 327 extending radially from the fan hub 324 toward the fan case 314.

The illustrative fan blade 326 includes a root 328, which is coupled to the fan hub 324, and a tip 330, which is substantially near or adjacent to the case 314 (e.g., separated from the case 314 by an amount of clearance, which is determined by the requirements of a particular design). The one or more fan blades 326 are configured to rotate with the engine drive shaft 320. Each fan blade 326 includes a leading edge 332 and a trailing edge 334. The leading edge 332 is oriented to be facing towards the air intake side of the fan assembly 310 (e.g., to receive airflow in the direction of arrow 316). Conversely, the trailing edge 334 is oriented to be facing towards the air exhaust side of the fan assembly 310 (e.g., to receive air flowing toward the direction of arrow 318).

The fan case 314 is configured to encompass the fan 312, and to direct air flow through the fan 312 to either an exhaust port or one or more compressors (not shown in FIG. 3). The fan case 314 also contains the fan blades 326 in the event of the mechanical failure of one of the blades 326. In some embodiments, the case 314 includes a containment case 336 and a liner 338. The containment case 336 is configured to minimize the damage to the airplane in the event that a fan blade 326 experiences a mechanical failure, such as, for example, a fan blade 326 breaks free from the fan hub 324. In some embodiments, the liner 338 is configured to provide an attrition layer that can be contacted by the fan blades 326 while the engine is in motion.

In the embodiment of FIG. 3, the fan assembly 310 includes a blade motion control system 126, which includes one or more fan case mounted devices 350, one or more detectable materials 352, and one or more control units 146. The one or more fan case mounted devices 350 are coupled to the case 314, such that the fan case mounted devices 350 are positioned radially outward from the fan blades 326. In some embodiments, the fan case mounted devices 350 are positioned in the liner 338, so as to be as close as possible to the fan blade 326. The fan case mounted devices 350 may include blade motion sensors (e.g., inductive coils) and/or blade motion control devices (e.g., electromagnets).

In the illustrative embodiment, the one or more detectable materials 352 include one or more permanent magnets coupled to the one or more fan blades 326. The illustrative magnets 352 are positioned in, on or near the tip 330 of each fan blade 326. In some embodiments, the detectable material 352 is positioned in, on, or near the tip 330 and the leading edge 332 of the fan blade 326 (e.g., because the leading edge is more likely to experience motion due to harmonic modes). In some embodiments, the detectable material 352 is embodied as a permanent magnet that is coupled to the fan blade 326 on or just below the surface of the fan blade 326, with the permanent magnet's polar axis oriented radially outward to cause radiated magnetic flux of the permanent magnet to interact with the fan case mounted devices 350. Examples of permanent magnets include alloys made from iron, nickel, cobalt, or rare earth metals, such as neodymium. In some embodiments, each fan blade has one detectable material 352 coupled to it (e.g., by embedding the detectable material in a fan blade), and, in some embodiments, not all fan blades 326 include a detectable material 352.

The one or more control units 146 are electrically connected to each fan case mounted device 350 and are configured to communicate with each fan case mounted device 350. In an illustrative embodiment, all of the fan case mounted devices 350 are connected to a single control unit 146. The illustrative control unit 146 is configured to detect any type of damaging fan blade motion, and in some cases determine when fan blade motion is being caused by harmonic modes and to adjust operating conditions of the fan blades 326 to prevent and stop the damaging motion (e.g., motion caused by the harmonic modes). For example, when the gas turbine engine 110 is in operation, the fan 312 will rotate at high speeds. Occasionally, the motion of the fan 312 combined with other factors, such as, for example, cross-winds, may cause irregular air flows through the fan assembly 310. These irregular air flows may disturb the motion of the fan and cause the fan blade to oscillate, for example, the irregular air flows can cause the fan to experience an unbalanced load. Generally, these disturbances cause random fluctuations in the operation of the fan 312, but occasionally the disturbances begin to oscillate at a steady and specific frequency. These oscillations at a steady frequency are called harmonic modes. For example, a flat harmonic mode causes the fan blade to flap back and forth as it rotates about the motor axis 322. In another example, a torsional harmonic mode causes the fan blade to twist as it rotates about the motor axis 322. These motions can cause mechanical failure of the fan blade. For example, a flat harmonic mode may cause the fan blade to bend near its root end 328. Such bending of the fan blade may eventually weaken the fan blade 326 enough that a piece of the fan blade may break off. In another example, blade motion indicative of harmonic modes may be the result of blade flutter caused by irregular driven flow interactions in the blade passages.

The blade motion control system 126 (including the fan case mounted devices 350, the detectable materials 352, and the control unit(s) 146) is configured to detect when a fan blade 326 is experiencing motion caused by harmonic modes. A time-varying magnetic field is received by the one or more fan case mounted devices 350 as the fan blade 326 rotates about the motor axis 322. In some embodiments, fan case mounted devices 350 include induction coils sized and positioned to detect the time-varying magnetic fields that are generated by the movement of the detectable materials 352 coupled to the fan blades 326. The time-varying magnetic field induces a voltage on the induction coils. The fan case mounted devices 350 transmit the induced voltage to the control units 146. The control unit 146 interprets the time-varying voltages to determine whether the fan blades 326 are experiencing motion caused by harmonic modes. In some embodiments, the control unit 146 compares the received motion data to reference data (e.g., motion data generated in a test environment) to determine whether motion caused by harmonic modes is present. The reference motion data can include, for example, test results that indicate the parameters that are associated with normal fan blade motion.

If the control unit 146 determines that motion caused by a harmonic mode is present, the control unit 146 is configured to adjust one or more operating conditions of the turbine engine 110 to disrupt the motion caused by the harmonic mode. In some embodiments, the control unit 146 sends a signal to one or more fan case mounted devices 350 to apply a force to the fan blade 326.

In embodiments in which the one or more fan case mounted devices 350 includes a blade motion control device, such as an electromagnet, the control unit 146 sends a signal to the electromagnet that causes the electromagnet to become energized. Once energized, the electromagnet creates a magnetic field that exerts a force on the detectable materials 352 coupled to the fan blades 326 (e.g., exerts a force on a permanent magnet embedded in the fan blade). The electromagnet applies enough force to the detectable materials 352 so that the motion caused by the harmonic oscillations in the fan blades 326 is disrupted and stopped. In some embodiments, the electromagnets pulse the generated magnetic field intermittently to more effectively disrupt the motion caused by the harmonic modes. In some embodiments, the control unit 146 changes other operating conditions of the turbine engine 110, such as changing the rotation speed of the fan 312, usually by changing the throttle position of the engine 110. In some embodiments, additional power may be supplied to the blade motion control system 126, for example, by a battery, by an auxiliary power unit, or by a motor-generator. While only the fundamental elements of the blade motion control systems 126 are shown and discussed (e.g., the fan case mounted devices 350, the detectable materials 352, and the control unit 146), it should be understood that the blade motion control systems 126 may include other elements as needed, in order to condition the voltage waveform, store and release energy, e.g. diodes and capacitors, etc.

Referring now to FIG. 4, an embodiment 400 of a fan of the gas turbine engine 110 is shown. As shown in FIG. 4, the gas turbine engine 110 comprises a fan 401 and a case 402. The fan 401 includes a fan hub 424 and one or more fan blades 426. Coupled to a number of fan blades 426, is one or more detectable materials 452 such as, for example, one or more permanent magnets. In an illustrative embodiment, a detectable material 452 (e.g., a permanent magnet) is coupled to every other fan blade 426 (e.g., alternating fan blades 426), but, in other embodiments, a detectable material 452 is coupled to any number of fan blades 426. One or more fan case mounted devices 410, 412 are coupled to the case 402. Illustratively, the fan case mounted devices include both blade motion sensors 410, and blade motion control devices 412. In some embodiments, the blade motion sensors 410 are induction coils configured to detect time-varying magnetic fields created by the motion of the detectable materials 452 coupled to the fan blades 426. In some embodiments, the blade motion control devices 412 are electromagnets configured to dynamically exert a magnetic force on the detectable materials 452 embedded in the fan blades 426. The fan case mounted devices 410, 412 are electrically coupled to the control unit 146. The control unit 146 is configured to receive signals from the blade motion sensors 410, determine whether fan blades 426 are experiencing motion caused by harmonic modes, and adjust an operating condition of the gas turbine engine to disrupt the motion caused by the harmonic modes. The control unit 146 is connected to a power supply 414 to provide power to the control unit 146 and the fan case mounted devices 410, 412. For example, blade motion control devices may be electromagnets that require substantial amounts of power to generate a sufficiently strong magnetic force to disrupt and stop the motion caused by harmonic modes. Other details shown in FIG. 4 correspond to similar features shown in FIG. 3, described above; thus the description of those details is not repeated here.

The embodiment 400 shows less than all of the fan blades 426 (e.g., a subset of the blades 426) equipped with a detectable material 452. In the illustrative embodiment of FIG. 4, designs of a gas turbine engine system 100 include having certain fan blades installed with a detectable material 452 and fan case mounted devices 410, 412 spaced at intervals circumferentially around the fan case. This arrangement can be used to balance the improvements to engine performance provided by the blade motion control systems 126 with the added weight those same blade motion control systems 126 may add to the gas turbine engine system 100. In some embodiments, the blade motion sensors 410 and the blade motion control devices 412 are separate devices and spaced apart from one another so that the blade motion control devices 412 do not interfere with the magnetic fields detected by the blade motion sensors 410. In some embodiments, the blade motion sensors 410 and the blade motion control devices 412 are the same device. In other embodiments, the blade motion sensors 410 and the blade motion control devices 412 are separate devices and more blade motion sensors 410 are coupled to the fan assembly 310 than blade motion control devices 412.

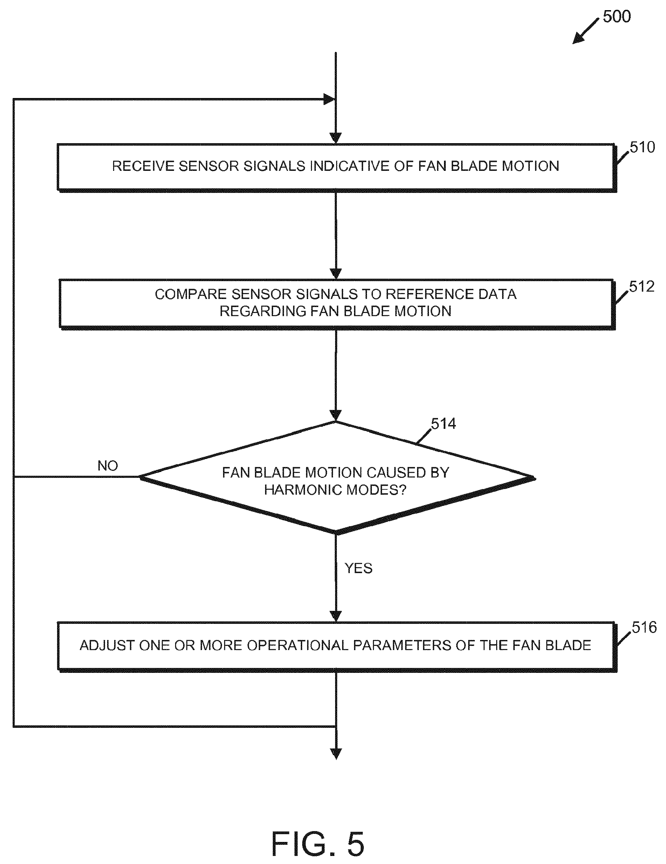

Referring to FIG. 5, a flowchart of a method 500 implemented by the control unit 146 is shown. At block 510, the control unit 146 receives sensor signals that include sensor data indicative of fan blade motion. In some embodiments, the sensors signals are time-varying voltages that relate to time-varying magnetic fields detected by one or more sensors. At block 512, the control unit 146 compares the received sensor data to the reference data regarding predicted fan blade motion. Discrepancies between the reference data and the received sensor data may indicate that one or more fan blades are experiencing motion caused by harmonic modes. For example, to detect fan blade motion cause by harmonic modes, the control unit 146 looks for a timing difference between a reference timing signal derived from the reference data and a measured timing signal of the fan blade. A blade tip that is resonating will arrive either early or late compared to the reference timing signal, thus indicating that the fan blade may be experiencing unusual motion that is indicative of resonance.

At block 514, the control unit 146 determines whether the received sensor data indicates that the motion of one or more fan blades is caused, in part, by harmonic modes. If fan blade motion is being caused by harmonic modes, at block 516, the control unit 146 adjusts one or more operational parameters of the fan to disrupt the harmonic oscillations caused by harmonic modes. For example, adjustable operational parameters may include adjusting the rotation speed of the fan or producing an external electromagnetic field that induces a force on the detectable materials 352 coupled to the fan blades 326. If fan blade motion is not being caused by harmonic modes, the control unit 146 returns to block 510 and continues to receive sensor signals and determine whether motion caused by harmonic modes is present in the fan blades 326.

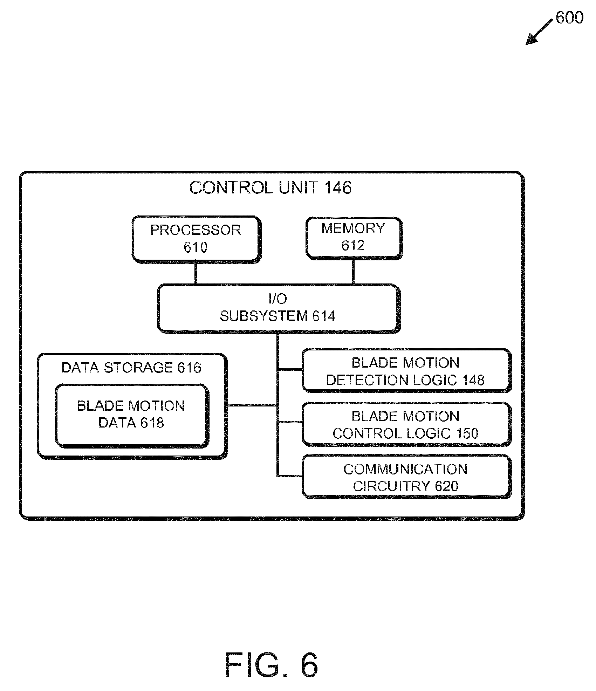

Referring now to FIG. 6, an embodiment of the control unit 146 is shown. The illustrative control unit 146 is embodied as electrical circuitry, which may include one or more computing devices having hardware and/or software components that are capable of performing the functions disclosed herein, including the functions of the blade motion detection logic 148 and the blade motion control logic 150. As shown, the control unit 146 may include one or more other computing devices (e.g., servers, mobile computing devices, etc.), which may be in communication with each other and/or the control unit 146 via one or more communication networks (not shown), in order to perform one or more of the disclosed functions. The illustrative control unit 146 includes at least one processor 610 (e.g. a controller, microprocessor, microcontroller, digital signal processor, etc.), memory 612, and an input/output (I/O) subsystem 614. The control unit 146 may be embodied as any type of electrical circuitry, which may include one or more controllers or processors (e.g., microcontrollers, microprocessors, digital signal processors, field-programmable gate arrays (FPGAs), programmable logic arrays (PLAs), etc.), and/or other electrical circuitry. For example, portions of the control unit 146 may be embodied as a computing device, such as a desktop computer, laptop computer, or mobile computing device (e.g., handheld computing device), a server, an enterprise computer system, a network of computers, a combination of computers and other electronic devices, or other electronic devices. Although not specifically shown, it should be understood that the I/O subsystem 614 typically includes, among other things, an I/O controller, a memory controller, and one or more I/O ports. The processor 610 and the I/O subsystem 614 are communicatively coupled to the memory 612. The memory 612 may be embodied as any type of suitable computer memory device (e.g., volatile memory such as various forms of random access memory).

The I/O subsystem 614 is communicatively coupled to a number of hardware and/or software components, including a data storage device 616, communication circuitry 620, blade motion detection logic 148, and blade motion control logic 150. The data storage device 616 may include one or more hard drives or other suitable persistent data storage devices (e.g., flash memory, memory cards, memory sticks, and/or others). Blade motion data 618 (e.g., reference data, as described above), and/or any other data needed by the blade motion detection logic 148 and the blade motion control logic 150 to perform the functions disclosed herein, may reside at least temporarily in the data storage device 616 and/or other data storage devices of or coupled to the control unit 146 (e.g., data storage devices that are "in the cloud" or otherwise connected to the control unit 146 by a network, such as a data storage device of another computing device). Portions of the blade motion detection logic 148 and the blade motion control logic 150 may reside at least temporarily in the data storage device 616 and/or other data storage devices that are part of the control unit 146. Portions of the blade motion data 618, the blade motion detection logic 148, and/or the blade motion control logic 150 may be copied to the memory 612 during operation of the gas turbine engine system 100, for faster processing or other reasons.

The communication circuitry 620 may communicatively couple the control unit 146 to one or more other devices, systems, or communication networks, e.g., a local area network, wide area network, personal cloud, enterprise cloud, public cloud, and/or the Internet, for example. Accordingly, the communication circuitry 620 may include one or more wired or wireless network interface software, firmware, or hardware, for example, as may be needed pursuant to the specifications and/or design of the particular turbine engine system 100.

The blade motion detection logic 148 and the blade motion control logic 150 are embodied as one or more computer-executable components and/or data structures (e.g., computer hardware, software, or a combination thereof). Particular aspects of the methods and analyses that may be performed by the blade motion detection logic 148 or the blade motion control logic 150 may vary depending on the requirements of a particular design of the turbine engine system 100. Accordingly, the examples described herein are illustrative and intended to be non-limiting. Further, the control unit 146 may include other components, sub-components, and devices not illustrated herein for clarity of the description. In general, the components of the control unit 146 are communicatively coupled by electronic signal paths, which may be embodied as any type of wired or wireless signal paths capable of facilitating communication between the respective devices and components.

In the foregoing description, numerous specific details, examples, and scenarios are set forth in order to provide a more thorough understanding of the present disclosure. It will be appreciated, however, that embodiments of the disclosure may be practiced without such specific details. Further, such examples and scenarios are provided for illustration, and are not intended to limit the disclosure in any way. Those of ordinary skill in the art, with the included descriptions, should be able to implement appropriate functionality without undue experimentation.

References in the specification to "an embodiment," etc., indicate that the embodiment described may include a particular feature, structure, or characteristic, but every embodiment may not necessarily include the particular feature, structure, or characteristic. Such phrases are not necessarily referring to the same embodiment. Further, when a particular feature, structure, or characteristic is described in connection with an embodiment, it is believed to be within the knowledge of one skilled in the art to effect such feature, structure, or characteristic in connection with other embodiments whether or not explicitly indicated.

Embodiments in accordance with the disclosure may be implemented in hardware, firmware, software, or any combination thereof. Embodiments may also be implemented as instructions stored using one or more machine-readable media, which may be read and executed by one or more processors. A machine-readable medium may include any mechanism for storing or transmitting information in a form readable by a machine. For example, a machine-readable medium may include any suitable form of volatile or nonvolatile memory.

Modules, data structures, and the like defined herein are defined as such for ease of discussion, and are not intended to imply that any specific implementation details are required. For example, any of the described modules and/or data structures may be combined or divided into sub-modules, sub-processes or other units of computer code or data as may be required by a particular design or implementation.

In the drawings, specific arrangements or orderings of schematic elements may be shown for ease of description. However, the specific ordering or arrangement of such elements is not meant to imply that a particular order or sequence of processing, or separation of processes, is required in all embodiments. In general, schematic elements used to represent instruction blocks or modules may be implemented using any suitable form of machine-readable instruction, and each such instruction may be implemented using any suitable programming language, library, application programming interface (API), and/or other software development tools or frameworks. Similarly, schematic elements used to represent data or information may be implemented using any suitable electronic arrangement or data structure. Further, some connections, relationships or associations between elements may be simplified or not shown in the drawings so as not to obscure the disclosure.

This disclosure is to be considered as exemplary and not restrictive in character, and all changes and modifications that come within the spirit of the disclosure are desired to be protected.

## Claims

1. A method for controlling motion caused by harmonic modes in a gas turbine engine fan blade (113, 326, 327), the method performed by a turbine engine control unit (146), the method comprising:
receiving a sensor signal that includes motion data indicative of fan blade motion of a fan of a gas turbine engine (110);
determining whether the fan blade motion is caused by a harmonic mode by comparing the motion data to reference data indicative of an expected fan blade motion during normal operation of the gas turbine engine (110); and
adjusting an operational parameter of the gas turbine engine (110) in response to determining that the fan blade motion is caused by a harmonic mode.

2. The method of claim 1, wherein receiving a sensor signal comprises receiving timing data indicative of fan blade motion of the gas turbine engine fan (112, 210, 312,401).

3. The method of claim 2, wherein determining whether the fan blade motion is caused by harmonic modes comprises comparing the timing data to reference timing data.

4. The method of any of claims 1-3, comprising obtaining the reference data by detecting the fan blade motion of the gas turbine engine fan (112, 210, 312, 401) in a test environment.

5. The method of any of claims 1-4, wherein determining whether the fan blade motion is caused by harmonic modes comprises determining that the motion data is different than the reference data.

6. The method of any of claims 1-5, wherein adjusting an operational parameter of the gas turbine engine (110) comprises applying a magnetic force to the fan blade (113, 326, 327), and/or
wherein adjusting an operational parameter of the gas turbine engine (110) comprises adjusting the rotation speed of the gas turbine engine fan blade (113, 326, 327), and/or
wherein adjusting an operational parameter of the gas turbine engine (110) comprises adjusting a pitch of the fan blade (113, 326, 327).

7. A system for controlling harmonic modes in a gas turbine engine (110), the system comprising:
a gas turbine engine (110) comprising:
a turbo fan (112, 210, 312, 401) that includes a rotor (238) and a plurality of fan blades (113, 326, 327), each fan blade (113, 326, 327) extending radially outward from the rotor (238) having a blade root (328) coupled to the rotor (238) and a blade tip (330) opposite the blade root (328), wherein a permanent magnet (352) is coupled to one or more fan blades (113, 326, 327) near the blade tip (330);
a fan (112, 210, 312, 401) casing surrounding the turbo fan (112, 210, 312, 401);
one or more sensors coupled to the fan (112, 210, 312, 401) casing configured to detect the motion of the permanent magnet (352) coupled to the one or more fan blades (113, 326, 327) and output motion data; and
a control unit (146) in communication with the one or more sensors (160, 410) to receive motion data from the one or more sensors (160, 410).

8. The system of claim 7, wherein each fan blade (113, 326, 327) includes a leading edge (332) and a trailing edge (334), and the permanent magnet (352) is coupled to the fan blade (113, 326, 327) near the leading edge (332) of the fan blade (113, 326, 327) and near the blade tip (330) of the one or more fan blades (113, 326, 327).

9. The system of claim 7 or claim 8, wherein the fan (112, 210, 312, 401) casing includes a containment case (336) and a fan track liner (338), wherein the sensor (160, 410) is coupled to the fan track liner (338) of the fan casing.

10. The system of any of claims 7-9, wherein the sensor (160, 410) comprises an induction loop configured to detect a time-varying magnetic field caused by the motion of the permanent magnet (352) coupled to the one or more fan blades (113, 326, 327).

11. The system of any of claims 7-10, wherein the sensor sends sensor signals to the control unit (146), and the sensor signals include motion data indicative of the motion of the fan blades (113, 326, 327).

12. The system of any of claims 7-11, wherein the control unit (146) is configured to determine whether the motion of one or more fan blades (113, 326, 327) is caused by a harmonic mode by comparing the motion data to reference data.

13. The system of any of claims 7-12, wherein the sensor (160, 410) is configured to produce a magnetic field that can affect the motion of the one or more fan blades (113, 326, 327) by exerting a magnetic force on the permanent magnet (352) coupled to the one or more fan blades (113, 326, 327).

14. The system of any of claims 7-13, comprising one or more electromagnets coupled to the fan casing.

15. A system for controlling harmonic modes in a gas turbine engine (110), the system comprising:
a gas turbine engine (110) comprising:
a turbo fan (112, 210, 312, 401) that includes a rotor (238) and a plurality of fan blades (113, 326, 327), each fan blade (113, 326, 327) extending radially outwardly from the rotor (238), each fan blade (113, 326, 327) having a blade root (328) coupled to the rotor (238) and a blade tip (330) opposite the blade root (328), wherein a permanent magnet (352) is coupled to one or more of the fan blades (113, 326, 327) near the blade tip (330); and
a fan casing surrounding the turbo fan (112, 210, 312, 401);
one or more sensors (160, 410) coupled to the fan casing and configured to detect a change in a magnetic field caused by the permanent magnet (352);
a controller coupled to the gas turbine engine (110) and configured to determine, based on sensor (160, 410) signals produced by the one or more sensors (160, 410), whether the motion of the one or more fan blades (113, 326, 327) is caused by harmonic modes; and
one or more electromagnets coupled to the fan casing and configured to exert an electromechanical force on the permanent magnet (352),
further comprising a power source coupled to the one or more electromagnets and the control unit (146), wherein the power source is configured to provide power to the one or more electromagnets when the controller detects that the motion of one or more fan blades (113, 326, 327) includes motion caused by harmonic modes,
wherein the one or more electromagnets are configured to generate a magnetic field that exerts a magnetic force on the permanent magnet (352) coupled to the one or more fan blades (113, 326, 327) to cause the one or more fan blades (113, 326, 327) to move,
wherein the one or more electromagnets is pulsed to generate an intermittent magnetic field,
wherein the one or more sensors (160, 410) and the one or more electromagnets are coupled to the fan casing and the one or more sensors (160, 410) and the one or more electromagnets are disposed in an evenly-spaced radial pattern around the casing,
wherein the number of sensors (160, 410) coupled to the fan casing is different than the number of electromagnets coupled to the fan casing,
wherein the number of sensors (160, 410) coupled to the fan casing is greater than the number of electromagnets coupled to the fan casing.
